# EUROPÄISCHE PATENTSCHRIFT

(11) **EP 1 692 248 B1**
(45) Veröffentlichungstag und Bekanntmachung des Hinweises auf die Patenterteilung: **27.10.2010**
(21) Anmeldenummer: 04798108.9
(22) Anmeldetag: 27.11.2004
(51) Int. Cl.: C10L 3/10, B01D 53/14

(54) **Verfahren zur Verschiebung von Sauergasanteilen innerhalb eines Erdgasnetzwerkes**
Method for displacing acid gas constituents inside a natural gas network
Procédé pour déplacer des composantes acides dans un réseau de gaz naturel

(30) Priorität: 05.12.2003 DE 10357324
(43) Veröffentlichungstag der Anmeldung: 23.08.2006
(73) Patentinhaber: Uhde GmbH, 44141 Dortmund (DE)
(72) Erfinder: MENZEL, Johannes, 45731 Waltrop (DE)
(86) Internationale Anmeldenummer: PCT/EP2004/013491
(87) Internationale Veröffentlichungsnummer: WO 2005/053354

(56) Entgegenhaltungen:
- EP-A2- 0 279 494
- EP-A2- 0 920 901
- DE-A1- 10 219 900
- US-A- 4 395 385

## Beschreibung

Die Erfindung betrifft ein Verfahren zur Verschiebung von Sauergasanteilen innerhalb eines Erdgasnetzwerkes. Es kann genutzt werden für rohe Erdgase, die neben Wertstoffkomponenten wie Methan, höheren Kohlenwasserstoffen, Wasserstoff und Kohlenmonoxid Verunreinigungen wie Schwefelwasserstoff, organische Schwefelkomponenten, wie z.B. Merkaptane, und Kohlenoxidsulfid, ferner auch Kohlendioxid und geringe Mengen an Wasserdampf in unterschiedlichen Anteilen enthalten.

In der Regel ist es notwendig, die im rohen Erdgas enthaltenen Schwefelkomponenten für die weitere technische Nutzung bis auf ppm-Gehalte aus dem Gas zu entfernen. Die Entfernung von Schwefelwasserstoff, Merkaptanen, Kohlendioxid und sonstigen Sauergasbestandteilen aus technischen Gasen erfolgt im allgemeinen mittels chemisch wirkenden Absorptionsmitteln, wie z.B. Aminlösungen, Alkalisalzlösungen etc. oder physikalisch wirkenden Absorptionsmitteln wie z.B. Selexol, Propylencarbonat, N-Methylpyrrolidon, Morphysorb, Methanol u.a., in Kreislaufsystemen, wobei physikalisch wirkende Absorptionsmittel im Gegensatz zu chemisch wirkenden Waschmitteln in der Lage sind, auch organische Schwefelkomponenten zu entfernen. Das im Gas enthaltene Kohlendioxid wird dabei je nach Zielsetzung und Aufgabenstellung entweder ganz, zum Teil oder auch so wenig wie möglich entfernt.

Üblicherweise wird das von der Absorptionsmittelregeneration kommende Sauergas in einer beistehenden Claus-Anlage zu Schwefel weiter verarbeitet. Hierbei begrenzen sowohl die Abscheidekapazität der Sauergasabsorption als auch die zugehörige Verarbeitungskapazität der Claus-Anlage die Menge an Sauergas, die aus dem Erdgas absorbiert werden kann, somit auch den möglichen Durchsatz an Erdgas, welches durch Absorption gereinigt werden kann.

Anlagen dieser Art existieren in großer Zahl an den verschiedensten Standorten. Oft tritt aber die Schwierigkeit auf, dass sich der Gehalt an Sauergasen während der Ausbeutung eines Erdgasfeldes ändert, insbesondere dass er ansteigt. Eine Erhöhung des Sauergasgehalts im Erdgas würde bei gleicher Fördermenge dann dazu führen, dass sowohl die Sauergasabscheidung als auch die Claus-Anlage überlastet wären. In der Folge müssten dann entweder die Erdgas-Fördermenge verringert oder die vorhandenen Anlagen aufwändig nachgerüstet werden, während gleichzeitig eine andere Anlage z.B. aufgrund von sinkenden Sauergas-Anteilen oder Fördermengen noch Kapazitäten übrig hätte.

Es besteht daher seit langem ein Interesse an einer wirtschaftlich günstigen Möglichkeit, das im Erdgas enthaltene Sauergas von überlasteten Sauergasentfernungs- mit Claus-Anlagen hin zu solchen Sauergasentfernungs- mit Claus-Anlagen zu verbringen, die noch Sauergas-Verarbeitungskapazitäten übrig haben, und alle Anlagen mit ihrer maximalen Erdgaskapazität zu betreiben.

Der Erfindung liegt daher die Aufgabe zugrunde, ein Verfahren zur Verfügung zu stellen, welches es auf einfache und wirtschaftliche Weise ermöglicht, Sauergasanteile aus Erdgas hin zu Sauergasentfernungs- mit Claus-Anlagen mit freien Kapazitäten zu verschieben.

Die Erfindung löst die Aufgabe dadurch, dass
- das aus einem ersten, Sauergas enthaltenden Erdgasstrom ein Teil des Sauergases abgeschieden wird,
- das aus dem ersten Erdgasstrom entfernte Sauergas zumindest einer weiteren Sauergasentfernungs-Anlage zugeführt wird, und
- die Zuführung dadurch bewirkt wird, dass das aus dem ersten Erdgasstrom entfernte Sauergas zumindest einem zweiten Erdgasstrom zugemischt wird, mit dem zusammen es zu zumindest einer weiteren Sauergasentfernungs-Anlage transportiert wird.

Hierdurch ergibt sich zum Einen der Vorteil, dass die Abscheidung des Sauergases aus dem ersten Erdgasstrom variabel so eingestellt werden kann, dass sich für die anschließende Sauergasentfernungs- mit Claus-Anlage, innerhalb der die eigentliche Abscheidung der Schwefelkomponenten sowie deren Aufarbeitung erfolgt, ein optimaler Durchsatz einstellen und sich somit diese Anlage stets bei Nennleistung betreiben lässt. Unter Nennleistung wird hierbei der maximal mögliche Gasdurchsatz und die maximal zulässige Sauergas-Verarbeitungskapazität verstanden. Zum anderen ergibt sich der Vorteil, dass keine neuen Zuleitungs-Pipelines benötigt werden, da die zuführenden Erdgas-Pipelines zu den vorhandenen Sauergasbehandlungsanlagen bereits existieren.

Der zweite Erdgasstrom, dem das abgeschiedene Sauergas zugemischt wird, kann sowohl ein bereits gereinigter als auch ein noch ungereinigter Erdgasstrom sein. Wichtig ist nur, dass er das mit Sauergas verunreinigte Erdgas zu einer oder mehreren nachfolgenden Sauergasentfernungs- mit Claus-Anlagen transportiert, welche noch Sauergas-Verarbeitungskapazität übrig haben.

Die Sauergas-Abscheidung aus dem ersten, Sauergas enthaltenden Erdgasstrom erfolgt erfindungsgemäß immer nur zu einem Teil. Diese Teilabscheidung ist ein wesentlicher Teil der Erfindung und zum Einen so zu verstehen, dass keinerlei Reinheitsanforderungen an den verbleibenden Sauergasgehalt gestellt werden. Zum Anderen ist dieser Teil, der erfindungsgemäß abgeschieden wird, ein jeweils definierter, wählbarer und einstellbarer Teil, nämlich genau jener, welcher verschoben werden soll, er kann je nach Auslastungsgrad der verbundenen Sauergasentfernungs- mit Claus-Anlagen auch zeitlich variieren. Abscheidungseinrichtungen, die praktisch alles oder fast alles Sauergas entfernen, erfüllen das Kriterium der Teilabscheidung im Sinne der Erfindung nicht.

In einer Ausgestaltung des erfindungsgemäßen Verfahrens erfolgt die Abscheidung des in dem ersten Erdgasstrom enthaltenen Sauergases mittels eines Verfahrens der Absorption, wobei
- der abzuscheidende Teil des Sauergases mittels eines regenerierten, nicht chemisch wirkenden Absorptionsmittels aus dem ersten Erdgasstrom ausgewaschen wird,
- das beladene Absorptionsmittel dem Kopf einer Desorptionseinrichtung zugeführt wird, und
- das die Desorptionseinrichtung verlassende, desorbierte Sauergas einem zweiten Erdgasstrom zugemischt wird.

In einer Ausgestaltung des erfindungsgemäßen Verfahrens wird der Desorptionseinrichtung ein zumindest teilgereinigter Erdgasstrom als Strippgas im Sumpf zugeführt, das Strippgas zusammen mit dem desorbierten Sauergas dem zweiten Erdgasstrom zugemischt wobei die Desorptionseinrichtung als Stripperkolonne ausgeführt wird. Hierbei kann die Desorptionseinrichtung bei einem solchen Druckniveau betrieben werden, dass das desorbierte, mit Strippgas gemischte Sauergas ohne weitere Verdichtung dem Erdgasstrom zugemischt werden kann, der zu der Sauergasentfernungsanlage mit freier Sauergasentfernungskapazität geführt wird. Zweckmäßigerweise kann man das beladene Absorptionsmittel auch vor der Zugabe in die Desorptionseinrichtung erwärmen.

In einer alternativen Ausgestaltung des Verfahrens wird in die Desorptionseinrichtung das beladene Absorptionsmittel geflasht und die Desorptionseinrichtung als Flashbehälter ausgeführt. Hierbei kann der Flashbehälter bei einem solchen Druckniveau betrieben werden, dass das geflashte Sauergas ohne weitere Verdichtung dem Erdgasstrom zugemischt werden kann, der zu der Sauergasentfernungsanlage mit freier Sauergasentfernungskapazität geführt wird, wobei dann das beladene Absorptionsmittel vor Eintritt in den Flashbehälter erwärmt wird.

Üblicherweise enthalten aus nicht-chemischen Absorptionsmitteln desorbierte Sauergase noch mitabgeschiedene Wertkomponenten aus dem Erdgas, welche aufwändig zurückgewonnen werden müssen, etwa durch Recyclegas-Flashstufen. Dieser Aufbereitungsschritt entfällt hier, weil die mitabgeschiedenen Wertkomponenten bei der Desorption an einen anderen, den als Strippgas verwendeten Erdgasstrom abgegeben werden und somit nicht verfallen, was ein Vorteil der Erfindung ist.

Ein weiterer Vorteil sind die geringen Anforderungen an die Regeneration des Absorptionsmittels. Bekanntlich bestimmt die gewünschte Endreinheit des zu reinigenden Erdgases den nach der Regeneration des Absorptionsmittels zulässigen Anteil an Resten im Absorptionsmittel, da sich bei nicht-chemisch wirkenden Absorptionsmitteln am Kopf der Absorptionskolonne ein Gleichgewicht zwischen dem Restanteil im Absorptionsmittel und dem im Erdgas einstellt. Wenn der Restgehalt an Sauergaskomponenten im Erdgas hoch sein darf, weil das auf diese Weise abgereichterte Erdgas noch eine nachfolgende Sauergasentfernungs- mit Claus-Anlage zu passieren hat, welche lediglich entlastet werden soll, ist keine vollständige Desorption des Absorptionsmittels notwendig, was ein weiterer Vorteil der Erfindung ist.

In einer Ausgestaltung des erfindungsgemäßen Verfahrens wird die Desorptionskolonne bei einem solchen Druckniveau betrieben, dass das desorbierte, mit Strippgas gemischte Sauergas ohne weitere Verdichtung dem Erdgasstrom zugemischt werden kann, der zu der Sauergasentfernungsanlage mit freier Sauergasentfernungskapazität geführt wird. Vorteilhaft ist hierbei, dass die Anpassung des Druckniveaus, meistens wird es sich um eine Erhöhung handeln, durch eine preiswerte Pumpe, welche das beladene Absorptionsmittel fördert, erfolgen kann und ein Verdichter allenfalls zur Druckeinstellung des Strippgases eingesetzt werden muss. Eine kostenintensive Sauergasverdichtung ist nicht erforderlich.

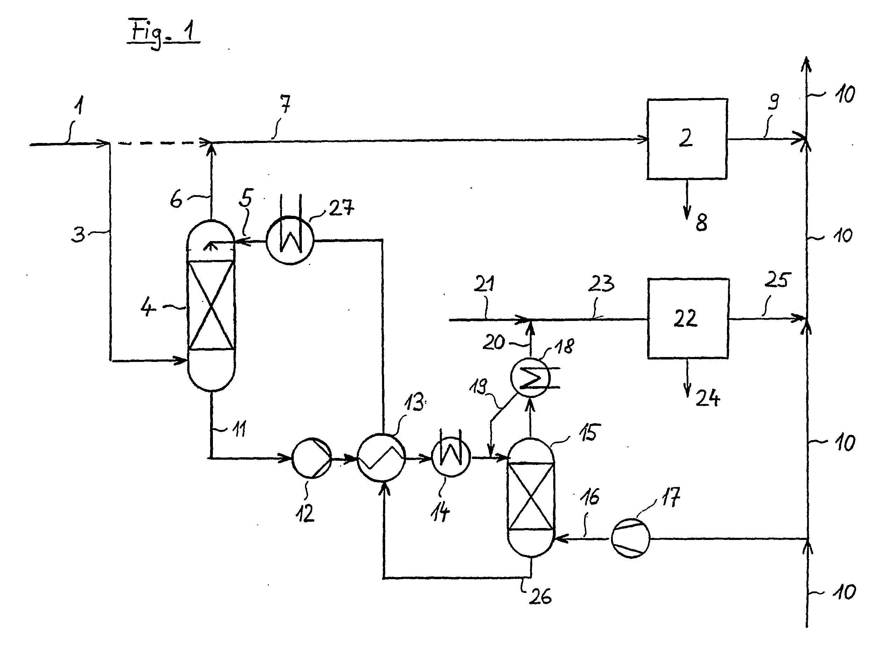

Die Erfindung wird nachfolgend anhand eines Verfahrensschemas in Fig. 1 näher erläutert: Fig. 1 zeigt das erfindungsgemäße Verfahren, bestehend aus 2 Sauergasentfernungs- mit Claus-Anlagen, einer Sauergasabsorption mit Desorption sowie die erfindungsgemäß verschalteten Erdgasströme, wobei das erfindungsgemäße Verfahren aber nicht auf diese beispielhafte Ausführungsform beschränkt ist.

Aus dem ersten Erdgasstrom 1, dessen Sauergasgehalt die Kapazität der ihm zugeordneten Sauergasentfernungs- mit Claus-Anlage 2 übersteigt, wird ein Teilstrom 3 abgezweigt und in den Sumpfbereich der Absorptionskolonne 4 geleitet. Das in der Absorptionskolonne 4 aufsteigende Erdgas wird durch das nicht-chemisch wirkende Absorptionsmittel 5 von Sauergas abgereichert und verlässt die Absorptionskolonne 4 über Kopf. Das abgereicherte Erdgas 6 kann dem ersten Erdgasstrom 1 wieder beigemischt werden.

Die Abzweigung des Teilstroms 3 und die Wiederbeimischung des abgereicherten Erdgases 6 können auch räumlich beieinander liegen, was durch Strichelung der verbindenden Leitung angedeutet ist. Der erste Erdgasstrom 1 kann auch vollständig in die Absorptionskolonne geleitet werden, die Abzweigung eines Teilstroms und die Wiederbeimischung entfallen dann. Entscheidend ist, dass das sich ergebende Erdgas 7 möglichst gut die Nenn-Kapazität der Sauergasentfernungs- mit Claus-Anlage 2 trifft, wo das Sauergas zu Schwefel 8 verarbeitet und das saubere Erdgas 9 der Produkt-Erdgas-Pipeline 10 zugeführt wird.

Bei der Abreicherung des Erdgases in der Absorptionskolonne 4 wird das Absorptionsmittel entsprechend mit Sauergas beladen und Absorbat 11 aus dem Sumpf ausgeschleust. Mit einer Druckerhöhungspumpe 12 wird ein Druckniveau eingestellt, welches den Einsatz eines nachfolgenden Sauergasverdichters verzichtbar macht. Das Absorbat wird anschließend im Wärmetauscher 13 und im Aufheizer 14 erwärmt und dann in den Kopfbereich der Desorptionskolonne 15 geleitet.

Als Strippgas wird eine geringe Menge Produkt-Erdgas 16, welches erforderlichenfalls von einem Erdgasverdichter 17 auf ein entsprechendes Druckniveau gehoben worden ist, von unten in die Desorptionskolonne 15 geleitet. Aufgrund der Erwärmung des Absorbats desorbiert ein großer Teil des absorbierten Sauergases und wird zusammen mit dem Strippgas über Kopf ausgetragen. Im nachfolgenden Absorptionsmittel-Kondensator 18 wird mitausgetragenes Absorptionsmittel auskondensiert und zurückgeführt, im vorgestellten Beispiel als Kondensat-Rückführung 19 direkt vor die Desorptionskolonne 15, ebenso gut möglich wäre eine Kondensat-Rückführung direkt vor den Aufheizer 14.

Das erhaltene Sauergas-Erdgasgemisch 20 wird einem zweiten Erdgasstrom 21, dessen Sauergasgehalt die Kapazität der ihm zugeordneten Sauergasentfernungs- mit Claus-Anlage 22 nicht erreicht, zugemischt. Hierdurch wird ein kleiner, konzentrierter Sauergasstrom in die Erdgasleitung 23 verschoben, was den Gesamtvolumenstrom in dieser Leitung nur geringfügig erhöht. Auf diese Weise wird sowohl die Transportkapazität der Erdgasleitung 23 genutzt als auch die Verarbeitungskapazität der Sauergasentfernungs- mit Claus-Anlage 22 besser ausgeschöpft. In der Sauergasentfernungs- mit Claus-Anlage 22 wird das Sauergas zu Schwefel 24 verarbeitet und das saubere Erdgas 25 der Produkt-Erdgas-Pipeline 10 zugeführt.

Das in der Desorptionskolonne 15 regenerierte Absorptionsmittel 26 wird aus dem Sumpf abgezogen und im Wärmetauscher 13 und anschließend im Kühler 27 auf Einsatztemperatur abgekühlt.

Die Vorteile der Erfindung werden auch im folgenden Rechenbeispiel deutlich: Zwei verschieden Sauergasentfernungsanlagen werden über ihre jeweils zugehörige Rohgasleitung mit Einsatzgas gespeist. Sauergasentfernungs- mit Claus-Anlage 2 kann 80 000 Nm³/h mit maximal 4 vol % H₂S verarbeiten. Sauergasentfernungs- mit Claus-Anlage 22 wird mit 110 000 Nm³/h Rohgas versorgt und ist für bis zu 12 vol % an H₂S ausgelegt. Nun steigt der H₂S-Anteil im Rohgas für Sauergasentfernungs- mit Claus-Anlage 2 auf 6,47 vol % während der H₂S-Anteil im Rohgas für Sauergasentfernungs- mit Claus-Anlage 22 bei 9,3 vol % H₂S liegt. Ohne Einsatz eines Verschiebungssystems müsste die Sauergasentfernungs- mit Claus-Anlage 2 auf einen Rohgasdurchsatz von 48 000 Nm³/h zurückgefahren werden, d.h. auf 60 % der Nennleistung, was zu einem entsprechenden Produktionsausfall von 40 % führt.

Durch die erfindungsgemäße Verfahrensweise kann nun auf kostengünstige Weise das überschüssige Sauergas aus Sauergasentfernungs- mit Claus-Anlage 2 hin zur Sauergasentfernungs- mit Claus-Anlage 22 verschoben werden. Der Sauergasgehalt wird in Sauergasentfernungs- mit Claus-Anlage 2 dadurch wieder auf 4 vol % eingestellt und die Anlage kann wieder bei 100 % Nennlast betrieben werden. Der H₂S-Gehalt in Sauergasentfernungs- mit Claus-Anlage 2 steigt von 9,3 vol % auf 10,8 vol %, der Durchsatz auf 101,9 % an. Bezieht man die Durchsätze auf den gesamten Produktgasstrom beider Anlagen, so kann mit der erfindungsgemäßen Variante eine Produktgasmenge von ca. 176 000 Nm³/h gegenüber einer Menge von 147000 Nm³/h ohne erfindungsgemäßer Verfahrensweise produziert werden, was einer Erhöhung der gesamten Produktionsmenge um ca. 20 % entspricht. Wird der H₂S-Gehalt zur Sauergasentfernungs- mit Claus-Anlage 2 noch weiter verringert, z.B. auf 3 %, kann sogar die Gaskapazität zur Sauergasentfernungs- mit Claus-Anlage 2 noch weiter gesteigert werden, etwa um 33 %, d.h. auf 107.000 Nm³, vorausgesetzt, die Sauergasentfernungs- mit Claus-Anlage 2 kann diese zusätzliche Menge hydraulisch durchsetzen.

Die folgende Tabelle zeigt das Rechenbeispiel tabellarisch, wobei die Ziffern denen in Fig. 1 entsprechen:

| Strom | Erdgas (mit H₂S) [kmol/h] | H₂S [kmol/h] | Absorptionsmittel [kmol/h] |
|---|---|---|---|
| 1 (= 3) | 3569,3 | 230,8 | - |
| 5 | - | 4,4 | 268,2 |
| 6 (= 7) | 3466,4 | 139,5 | - |
| 9 | 3326,9 | (4 ppm V) | - |
| 10 | 7839,9 | (4 ppm V) | - |
| 11 | - | 95,7 | 371,2 |
| 16 | 49 | (4 ppm V) | - |
| 20 | 152,9 | 91,3 | - |
| 21 | 4907,8 | 456,4 | - |
| 23 | 5060,7 | 547,7 | - |
| 25 | 4513 | (4 ppm V) | - |

### Bezugszeichenliste

- 1: erster Erdgasstrom
- 2: Sauergasentfernungsanlage mit Claus-Anlage
- 3: Teilstrom
- 4: Absorptionskolonne
- 5: Absorptionsmittel
- 6: abgereichertes Erdgas
- 7: Erdgas
- 8: Schwefel
- 9: sauberes Erdgas
- 10: Produkt-Erdgas-Pipeline
- 11: Absorbat
- 12: Druckerhöhungspumpe
- 13: Wärmetauscher
- 14: Aufheizer
- 15: Desorptionskolonne
- 16: Produkt-Erdgas
- 17: Erdgasverdichter
- 18: Absorptionsmittel-Kondensator
- 19: Kondensat-Rückführung
- 20: Sauergas-Erdgasgemisch
- 21: zweiter Erdgasstrom
- 22: Sauergasentfernungsanlage mit Claus-Anlage
- 23: Erdgasleitung
- 24: Schwefel
- 25: sauberes Erdgas
- 26: Absorptionsmittel
- 27: Kühler

## Patentansprüche

1. Verfahren zur Verschiebung von Sauergasanteilen aus Erdgas (1) hin zu Sauergasentfernungsanlagen (22) mit freien Kapazitäten, **dadurch gekennzeichnet, dass**
• aus einem ersten, Sauergas enthaltenden Erdgasstrom (3) ein Teil des Sauergases abgeschieden wird,
• das aus dem ersten Erdgasstrom entfernte Sauergas (20) zumindest einer weiteren Sauergasentfernungsanlage (22) zugeführt wird, und
• die Zuführung **dadurch** bewirkt wird, dass das aus dem ersten Erdgasstrom entfernte Sauergas (20) zumindest einem zweiten Erdgasstrom (21) zugemischt wird, mit dem zusammen es zu zumindest einer weiteren Sauergasentfernungsanlage (22) transportiert wird.

2. Verfahren nach Anspruch 1, **dadurch gekennzeichnet, dass** die Abscheidung des in dem ersten Erdgasstrom (3) enthaltenen Sauergases mittels eines Verfahrens der Absorption (4) durchgeführt wird, wobei
• der abzuscheidende Teil des Sauergases mittels eines regenerierten, nicht chemisch wirkenden Absorptionsmittels (5) aus dem ersten Erdgasstrom (3) ausgewaschen wird,
• das beladene Absorptionsmittel (11) dem Kopf einer Desorptionseinrichtung (15) zugeführt wird, und
• das die Desorptionseinrichtung (15) verlassende, desorbierte Sauergas einem zweiten Erdgasstrom (21) zugemischt wird.

3. Verfahren nach Anspruch 2, **dadurch gekennzeichnet, dass** der Desorptionseinrichtung (15) ein zumindest teilgereinigter Erdgasstrom (16) als Strippgas im Sumpf zugeführt wird, das Strippgas zusammen mit dem desorbierten Sauergas (20) dem zweiten Erdgasstrom (21) zugemischt wird und die Desorptionseinrichtung (15) als Stripperkolonne ausgeführt wird.

4. Verfahren nach Anspruch 3, **dadurch gekennzeichnet, dass** die Desorptionseinrichtung (15) bei einem solchen Druckniveau betrieben wird, dass das desorbierte, mit Strippgas gemischte Sauergas (20) ohne weitere Verdichtung dem Erdgasstrom 21 zugemischt werden kann, der zu der Sauergasentfernungsanlage (22) mit freier Sauergasentfernungskapazität geführt wird.

5. Verfahren nach Anspruch 4, **dadurch gekennzeichnet, dass** das beladene Absorptionsmittel (11) vor Eintritt in die Desorptionseinrichtung (15) erwärmt wird.

6. Verfahren nach Anspruch 2, **dadurch gekennzeichnet, dass** in die Desorptionseinrichtung (15) das beladene Absorptionsmittel (11) geflasht wird und die Desorptionseinrichtung (15) als Flashbehälter ausgeführt wird.

7. Verfahren nach Anspruch 6, **dadurch gekennzeichnet, dass** das beladene Absorptionsmittel (11) vor Eintritt in die Desorptionseinrichtung (15) erwärmt wird, die Desorptionseinrichtung (15) bei einem solchen Druckniveau betrieben wird, dass das geflashte Sauergas (20) ohne weitere Verdichtung dem Erdgasstrom (21) zugemischt werden kann, der zu der Sauergasentfernungsanlage (22) mit freier Sauergasentfernungskapazität geführt wird.

## Claims

1. Process for shifting sour gas portions from natural gas (1) to sour gas separation unit (22) with free capacities, **characterised in that**
• a portion of sour gas is withdrawn from first natural gas stream (3) with a sour gas content,
• sour gas (20) removed from the first natural gas stream is sent to a further sour gas separation unit (22), and
• the feed operation is effected in such a manner that the sour gas removed from the first natural gas stream (20) is mixed with at least one 2nd natural gas stream (21) and that this mixture is piped to at least one more sour gas separation unit (22).

2. Process in accordance with the Claim 1,
**characterised in that** the separation of the sour gas contained in the first natural gas stream (3) is effected by absorption (4) as follows:
• The sour gas portion to be separated is removed from the first natural gas stream (3), using a chemically active adsorbent (5);
• laden absorbent (11) is recycled to the head of desorption unit (15);
• the sour gas desorpted by desorption unit (15) leaves this unit and is admixed to a second natural gas stream (21).

3. Process according to Claim 2,
**characterised in that** a natural gas stream (16) that is at least partly purified is fed as stripping gas to the bottom of desorption unit (15), the stripping gas and the desorbed sour gas (20) being jointly admixed to second natural gas stream (21) and desorption unit (15) being designed as stripping column.

4. Process according to Claim 3,
**characterised in that** desorption unit (15) can be operated at a pressure level that permits the mixture of desorbed sour gas and stripping gas (20) to be added without compression to natural gas stream (21) which is piped to sour gas separation unit (22) with a free capacity for sour gas separation.

5. Process according to Claim 4,
**characterised in that** laden absorbent (11) is heated prior to entering sour gas absorption unit (15).

6. Process according to Claim 2,
**characterised in that** laden absorbent (11) is flashed in desorption unit (15) which in this particular case would be designed as flash vessel.

7. Process according to Claim 6,
**characterised in that** laden absorbent (11) is heated prior to entering desorption unit (15), desorption unit (15) being operated at a pressure level that permits flashed sour gas (20) to be added without compression to natural gas stream (21) which is piped to sour gas separation unit (22) with a free capacity for sour gas separation.

## Revendications

1. Procédé pour le déplacement de portions de gaz acide séparées du gaz naturel (1) et envoyées vers l'atelier d'extraction de gaz acide (22), avec des capacités libres, **caractérisé en ce que**
• l'on extrait une partie du gaz acide du premier courant de gaz naturel (3), à teneur en gaz acide :
• le gaz acide (20) séparé du premier courant de gaz naturel est alors envoyé, au minimum, vers un autre atelier d'extraction de gaz acide ;
• et l'amenée du gaz acide se fait par l'apport du gaz acide (20) séparé du premier courant de gaz naturel, par le mélange avec, au moins, un deuxième courant de gaz naturel (21) et que le mélange obtenu est ensuite envoyé vers un autre atelier d'extraction de gaz acide (22).

2. Procédé selon la revendication No.1, **caractérisé en ce que** l'extraction du gaz acide contenu dans le premier courant de gaz naturel (3) se fait à l'aide d'une procédure d'absorption (4) comme suit :
• La portion de gaz acide à séparer du premier courant de gaz naturel (3) se fait à l'aide d'un absorbent non chimique mais régénéré (5) ;
• L'absorbant chargé (11) est envoyé vers la tête d'une unité de désorption (15);
• Le gaz acide désorbé et sortant de l'unité de désorption (15) est mêlé avec un deuxième courant de gaz naturel (21).

3. Procédé selon la revendication No. 2, **caractérisé en ce que** l'unité de désorption (15) est alimentée en un courant de gaz naturel (16), qui est purifié au moins partiellement et mis en oeuvre comme gaz de strippage au fond de l'unité ; le dit gaz de strippage et le gaz acide désorbé (20) sont ensemble mêlés avec un deuxième courant de gaz naturel (21) et ensuite envoyés ensemble vers l'unité de désorption (15) installée comme colonne de strippage.

4. Procédé selon la revendication No. 3, **caractérisé en ce que** l'unité de désorption (15) peut fonctionner à un niveau de pression, qui permit une amenée du gaz acide (20) désorbé et mêlé avec du gaz de strippage, sans avoir besoin d'une post-compression pour être mélangé avec le courant de gaz naturel (21) bombé vers une unité d'extraction de gaz acide (22), avec une capacité libre pour la dite extraction.

5. Procédé selon la revendication No. 4, **caractérisé en ce que** l'absorbant chargé (11) est réchauffé avant d'être introduit dans l'unité de désorption (15).

6. Procédé selon la revendication No. 2, **caractérisé en ce que** l'absorbant chargé (11) est détendu dans l'unité de désorption (15), qui dans ce cas sera conçue comme récipient flash.

7. Procédé selon la revendiaction No. 6, **caractérisé en ce que** l'absorbant chargé (11) est réchauffé avant d'être introduit dans l'unité de désorption (15), qui fonctionne à un niveau de pression permettant un apport du gaz acide détendu (20), sans aucune post compression, au courant de gaz naturel (21), le dit courant étant envoyé vers l'atelier d'extraction de gaz acide (22), avec une capacité libre disponbile à ce but.
